# EUROPÄISCHE PATENTSCHRIFT

(11) **EP 0 595 944 B1**
(45) Veröffentlichungstag und Bekanntmachung des Hinweises auf die Patenterteilung: **14.12.1994**
(21) Anmeldenummer: 92916030.7
(22) Anmeldetag: 21.07.1992
(51) Int. Cl.: H04B 1/66

(54) **VERFAHREN ZUM ERMITTELN DER GLOBALEN MITHÖRSCHWELLE BEI EINER BITRATENREDUZIERENDEN QUELLCODIERUNG**
PROCESS FOR FINDING THE OVERALL MONITORING THRESHOLD DURING A BIT-RATE-REDUCING SOURCE CODING
PROCEDE DE DETERMINATION DU SEUIL GLOBAL D'ECOUTE LORS D'UN CODAGE A LA SOURCE REDUISANT LE DEBIT BINAIRE

(30) Priorität: 24.07.1991 DE 4124493
(43) Veröffentlichungstag der Anmeldung: 11.05.1994
(73) Patentinhaber: Institut für Rundfunktechnik GmbH, 80939 München (DE)
(72) Erfinder: SEDLMEYER, Robert, D-8045 Ismaning (DE); BREFORT, Andreas, D-4150 Krefeld (DE); GROH, Jens, D-8000 München 40 (DE); KRAFFT, Wolfgang, D-8000 München 40 (DE); ROSINSKI, Klaus, D-41751 Viersen-Dülken (DE); WIESE, Detlef, D-85399 Hallbergmoos (DE); STOLL, Gerhard, D-8051 Zolling (DE); LINK, Martin, D-8000 München 45 (DE)
(74) Vertreter: Konle, Tilmar, Dipl.-Ing.
(86) Internationale Anmeldenummer: EP9201658
(87) Internationale Veröffentlichungsnummer: WO9302508

(56) Entgegenhaltungen:
- EP-A- 0 176 243
- EP-A- 0 420 745
- EP-A- 0 424 162
- WO-A-88/10035

## Beschreibung

Die Erfindung bezieht sich auf ein Verfahren zum Ermitteln der globalen Mithörschwelle bei einer bitratenreduzierenden Quellcodierung.

Zur Codierung von digitalen Tonsignalen mit bitratenreduzierenden Codierverfahren, ist es aus der WO 88/04 117 bekannt, die spektrale Mithörschwelle zur Gewinnung einer Umquantisierungsvorschrift zu berechnen.

Da die zu übertragenden Signale nicht nur aus einem einzigen Ton, sondern aus einer Vielzahl von Harmonischen bestehen, sind die von solchen Signalen hervorgerufenen Mithörschwellen sehr verschieden. Deren Berechnung erfordert die Berücksichtigung aller relevanten tonalen Maskierer sowie aller relevanten Rauschmaskierer, die jeweils frequenz- und pegelabhängige Verdeckungsflanken besitzen. Eine derart umfangreiche Berücksichtigung erfordert einen entsprechend hohen Rechenaufwand im Quellcodierer, welcher sich nur bei einer Rechnersimulation, nicht jedoch bei einer Echtzeitrealisierung vertreten läßt.

Die Aufgabe der Erfindung besteht demgegenüber darin, den Rechenaufwand für eine bitratenreduzierende Quellcodierung insbesondere für Echtzeitanwendungen zu verringern.

Diese Aufgabe wird erfindungsgemäß durch die kennzeichnenden Merkmale des Patentanspruches 1 gelöst.

Vorteilhafte Ausgestaltungen und Weiterbildung des erfindungsgemäßen Verfahrens ergeben sich aus den Unteransprüchen.

Die Erfindung wird anhand der Zeichnungen näher erläutert. Es zeigt:
- Fig. 1: ein Blockschaltbild eines Quellcodierers zur Durchführung des erfindungsgemäßen Verfahrens;
- Fig. 2: ein Frequenzdiagramm mit drei Maskierern und der Ruhehörschwelle, deren gemeinsame Verdeckungswirkung in der erfindungsgemäß ermittelten, globalen Mithörschwelle resultiert.

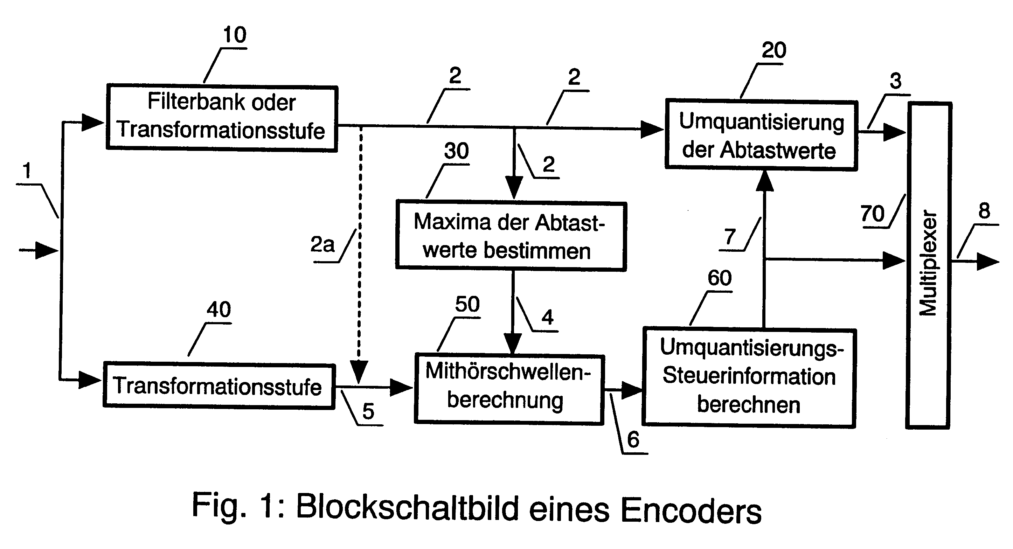

Bei dem Blockschaltbild nach Fig. 1 wird das eingangsseitige digitalisierte Tonsignal 1 im Falle einer Teilbandcodierung einer Polyphasen-Filterbank 10 zugeführt, welche Teilband-Abtastwerte 2 erzeugt. Im Falle einer Transformationscodierung wird die Filterbank 10 durch eine Zeit/Frequenz-Transformationsstufe ersetzt, welche diskrete, spektrale Abtastwerte erzeugt, z.B. entsprechend einer Cosinus- oder einer Fast-Fourier-Transformation. Die Abtastwerte 2 werden in einer Quantisierungsstufe 20 entsprechend ihres zulässigen Quantisierungsrauschens nach Maßgabe eines Codier- und Umquantisierungs-Steuerungssignals 7 umquantisiert. Das Steuerungssignal 7 wird zusammen mit den umquantisierten Abtastwerten 3 einem Multiplexer 70 zugeführt, welcher die Signale 3 und 7 je nach angewandter Bitratenreduktion in einen Zeitmultiplexrahmen einfügt, um das Ausgangssignal 8 zu bilden.

Das eingangsseitige, digitalisierte Tonsignal 1 wird ferner einer Transformationsstufe 40 zugeführt, welche im Falle einer Teilbandcodierung diskrete, spektrale Abtastwerte 5 erzeugt. Im Falle einer Transformationscodierung können die in der Zeit/Frequenz-Transformationsstufe ermittelten spektralen Abtastwerte als Abtastwerte 5 verwendet werden (gestrichelt eingezeichneter Pfad 2a). Aus den Abtastwerten 5 und ggf. den maximalen Signalpegeln 4 berechnet eine Stufe 50 nach einer erfindungsspezifischen Vorgehensweise die globale Mithörschwelle 6, wie im einzelnen noch näher erläutert wird.

Bei einer Teilbandcodierung werden aus den Abtastwerten 2 zusätzlich die maximalen Signalpegel 4 in den einzelnen Teilbändern durch eine Stufe 30 ermittelt.

Aus der globalen Mithörschwelle 6 wird in einer Stufe 60 das oben erwähnte Codier- und Umquantierungs-Steuerungssignal 7 erzeugt. Die Stufe 60 ist in Fig. 3, Informationsblöcke 5.5 und 5.3 der eingangs erwähnten WO 88/04117 beschrieben, worauf ausdrücklich Bezug genommen wird. Und zwar sind in dem dortigen Informationsblock 5.5 das Verhältnis zwischen maximal auftretendem (maskierendem) Teilbandpegel und minimaler, globaler Mithörschwelle (entsprechend zulässigem Quantisierungsrauschen) bestimmt, aus welchem in dem nachfolgenden Informationsblock 5.3 die teilbandmäßige Zuweisung der Quantisierung (=Auflösung) berechnet wird.

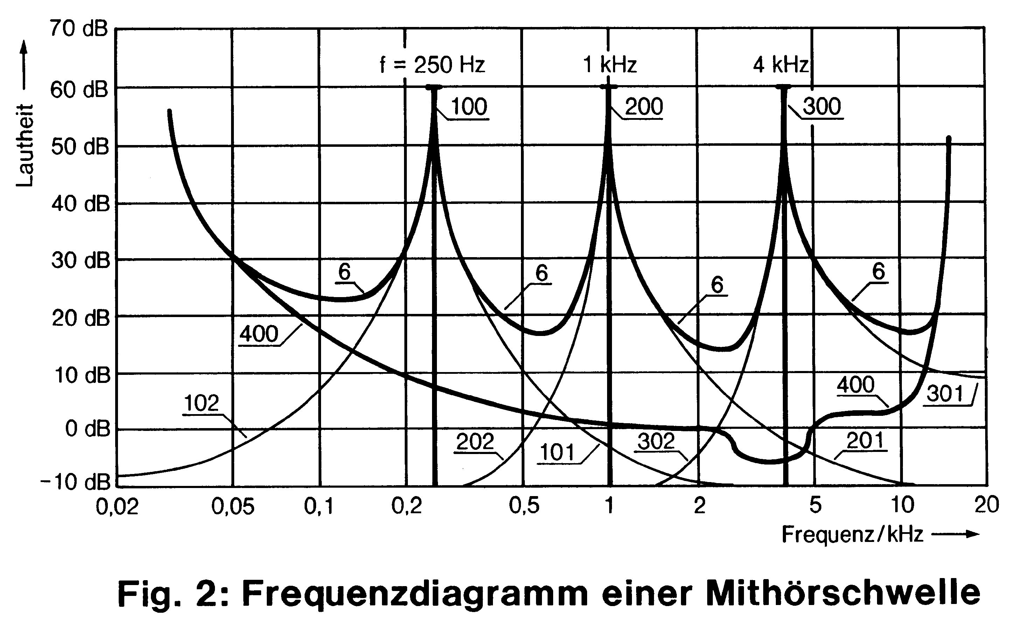

Im folgenden soll nunmehr unter Bezugnahme auf Fig. 2 die Berechnung der globalen Mithörschwelle 6 näher erläutert werden.

In dem Frequenzdiagramm nach Fig. 2 sind drei Maskierer 100, 200, 300 bei 250 Hz, 1 KHz und 4 kHz mit ihren oberen Verdeckungsflanken 101, 201 bzw. 301 sowie ihren unteren Verdeckungsflanken 102, 202 bzw. 302 aufgetragen. Weiterhin ist in Fig. 2 die Ruhehörschwelle 400 eingezeichnet. Aus dem Zusammenwirken von oberen und unteren Verdeckungsflanken 101, 201, 301, 102, 202, 302 und der Ruhehörschwelle 400 läßt sich unter Anwendung der nachstehenden, erfindungsspezifischen Vorgehensweise in vorteilhafter Weise die globale Mithörschwelle 6 ermitteln.

Und zwar werden bei einem bevorzugten Ausführungsbeispiel zur Reduktion des Rechenaufwandes für die Berechnung der globalen Mithörschwelle folgende Kriterien berücksichtigt:
a) Jeder Maskierer 100, 200, 300 besitzt, wie in Fig. 2 dargestellt, eine obere und eine untere Verdeckungsflanke 101 bzw. 102, 201 bzw. 202, 301 bzw. 302. Diese Verdeckungsflanken werden beschrieben durch Polynome höherer Ordnung. Da Polynomberechnungen sehr aufwendig sind, werden diese Verdeckungsflanken segmentiert und diese mit Polynomen niedriger Ordnung, z.B. Geradengleichungen angenähert.
b) Da die Verdeckungsflanken der einzelnen Maskierer zur Berechnung der globalen Mithörschwelle 6 ggf. Pegelabhängigkeiten enthalten, müssen die aus der Transformation der Tonsignale in den Frequenzbereich berechneten Intensitäten in logarithmische Pegel umgerechnet werden. Die Logarithmierung wird normalerweise ebenfalls mit einem Polynom höherer Ordnung berechnet und ist somit für eine Realisierung zu aufwendig. Da es jedoch ausreichend ist, die Logarithmierung mit einer begrenzten Genauigkeit zu berechnen, wird die Anzahl der in der Tabelle enthaltenen logarithmischen Pegelstufen erfindungsgemäß auf eine geringe Anzahl reduziert. Diese logarithmischen Pegel werden in einer Tabelle abgelegt, welche dann anstatt der Polynomberechnung benutzt wird. Wenn die Logarithmierung mit Hilfe einer Aufspaltung der Intensitäten in Mantisse und Exponent realisiert wird, so werden die logarithmischen Pegel der Mantisse in einer Tabelle abgelegt, welche dann anstatt der Polynomberechnung benutzt wird.
c) Nicht alle Maskierer sind für die Berechnung der globalen Mithörschwelle relevant, da ein Maskierer einen anderen Maskierer verdecken kann. Die Verdeckungsflanke eines solchen verdeckten Maskierers liegt pegel- oder intensitätsmäßig weit unterhalb der globalen Mithörschwelle und hat somit keine nennenswerte Auswirkung mehr auf die globale Mithörschwelle. Deshalb werden diese nicht relevanten Maskierer in der Stufe 50 aussortiert und nicht mehr zur Berechnung der globalen Mithörschwelle 6 herangezogen.
d) Alle Maskierer, deren Verdeckungsflanken intensitäts- oder pegelmäßig soweit unterhalb der Ruhehörschwelle 400 des menschlichen Gehörs liegen, daß die aus der Verdeckungskurve des Maskierers und der Ruhehörschwelle resultierende Verdeckung nicht wesentlich größer ist als die Ruhehörschwelle selbst, sind für die Berechnung der globalen Mithörschwelle nicht relevant, da die Verdeckungsfianke eines solchen Maskierers intensitäts- oder pegelmäßig weit unterhalb der globalen Mithörschwelle 6 liegt und somit keine nennenswerte Auswirkung mehr auf die globale Mithörschwelle hat. Deshalb werden auch diese nicht relevanten Maskierer in der Stufe 50 aussortiert und nicht mehr zur Berechnung der globalen Mithörschwelle 6 herangezogen.
e) Mit numerischen Methoden ist es in einem digitalen System prinzipiell nicht möglich, einen durchgehenden Kurvenverlauf zu berechnen. Die spektralen Stützstellen für die Berechnung der globalen Mithörschwelle 6 werden deshalb so festgelegt, daß sie nur an diskreten spektralen Orten berechnet werden.
f) Die erforderliche spektrale Auflösung zur Berechnung der globalen Mithörschwelle 6 läßt sich mit Hilfe der Psychoakustik in Bezug auf die Mithörschwelle auf eine begrenzte Anzahl von Stützstellen reduzieren. Die spektralen Stützstellen für die Berechnung der globalen Mithörschwelle 6 werden dehalb so festgelegt, daß sie im unteren Frequenzbereich einen niedrigeren spektralen Abstand haben als im oberen Frequenzbereich.
g) Zur Berechnung der globalen Mithörschwelle 6 muß das Tonsignal mit Hilfe einer Transformation in den Frequenzbereich abgebildet werden (Stufe 40; Fig. 1), um eine spektrale Analyse des Tonsignals zu ermöglichen. Die spektralen Stützstellen für die Berechnung der globalen Mithörschwelle 6 werden dabei so festgelegt, daß sie auf den Stützstellen dieser Transformation zu liegen kommen. Durch den höheren spektralen Abstand der Stützstellen zur Berechnung der Mithörschwelle im oberen Frequenzbereich wird dort nur ein Teil der Stützstellen der Transformation benutzt.
h) Die globale Mithörschwelle 6 wird an ihren Stützstellen schrittweise Maskierer für Maskierer berechnet. Da ein Maskierer in der Regel zu höheren Frequenzen hin mehr verdeckt als zu niedrigeren, wird bei der schrittweisen Berechnung der globalen Mithörschwelle 6 mit dem frequenzmäßig höchsten Maskierer begonnen, so daß das im folgenden Absatz beschriebene Abbruchkriterium möglichst früh zum Tragen kommt.
i) Bei der schrittweisen Berechnung der globalen Mithörschwelle 6 wird immer von dem jeweiligen Maskierer ausgehend dessen spektrale Verdeckungsflanke frequenzmäßig nach oben und danach nach unten berechnet. Dies ermöglicht einen frühzeitigen Abbruch der Berechnung des Verdeckungsanteils, der durch die Verdeckungsflanke des jeweiligen Maskierers zur globalen Mithörschwelle 6 beiträgt. Dieser Abbruch erfolgt sobald die Auswirkung der Verdeckungsflanke des jeweiligen Maskierers auf die bisher berechnete globale Mithörschwelle 6 ein bestimmtes Maß unterschreitet.
j) Die Berechnung der Auswirkung der Verdeckungsflanke eines Maskierers auf die globale Mithörschwelle 6 wird abgebrochen, sobald die Intensität oder der Pegel der Verdeckungsflanke des Maskieres an der momentan berechneten Stützstelle der globalen Mithörschwelle 6 ein bestimmtes Maß unterschreitet, so daß er keine nennenswerte Auswirkung mehr auf die globale Mithörschwelle 6 hat.
k) Die Berechnung der Auswirkung der Verdeckungsflanke eines Maskierers auf die globale Mithörschwelle 6 wird abgebrochen, sobald die Intensität oder der Pegel der Verdeckungsflanke des Maskierers an der momentan berechneten Stützstelle der globalen Mithörschwelle 6 ein bestimmtes Maß unter die Intensität oder den Pegel der Ruhehörschwelle 400 fällt und somit keine nennenswerte Auswirkung mehr auf die globale Mithörschwelle 6 hat.
l) Die globale Mithörschwelle 6 setzt sich, wie oben beschrieben, aus der Verdeckungswirkung verschiedener einzelner Maskierer 100, 200, 300 zusammen und wird durch Intensitätsaddition der Verdeckungsflanken 101, 102, 201, 202, 301, 302 dieser einzelnen Maskierer gebildet. Diese Intensitätsaddition erfordert normalerweise einen erheblichen Rechenaufwand, da ausgehend von logarithmischen Pegeln eine Intensitätsaddition mehrere Potenzierungen und Logarithmierungen erfordert. Die Intensitätsaddition wird deshalb mit Hilfe eines Nomogramms durchgeführt. Als Eingangswert für das Nomogramm wird der Absolutwert der Pegeldifferenz zwischen der bisher berechneten globalen Mithörschwelle 6 und der Verdeckungsflanke des momentan betrachteten Maskierers benutzt. Als Ausgangswert des Nomogramms erhält man einen logarithmischen Pegel, der zu dem maximalen Pegel, gebildet aus der bisher berechneten globalen Mithörschwelle 6 und der Verdeckungsflanke des momentan betrachteten Maskierers, addiert wird. Da die erforderliche Genauigkeit für die Intensitätsaddition begrenzt ist, wird die Anzahl der möglichen Pegeladditionswerte auf eine geringe Anzahl reduziert. Diese können für das Nomogramm voraus-berechnet werden und für die real auftretenden absoluten Pegeldifferenzen angewendet werden.

Von den vorgenannten Schritten a) bis 1) können im Bedarfsfall nur ein Teil der Schritte angewandt werden, wie dies in den Unteransprüchen angegeben ist.

## Patentansprüche

1. Verfahren zum Ermitteln der globalen Mithörschwelle (6) bei einer bitratenreduzierenden Quellcodierung digitalisierter Tonsignale (1), bei dem aus der Verdeckungswirkung aller relevanter tonaler Maskierer und Rauschmaskierer (100,200,300) sowie aus der Ruhehörschwelle (400) eine Umquantisierungs- und Codierungsvorschrift für die zeitlichen oder spektralen Abtastwerte (2) des Tonsignals ermittelt wird, **gekennzeichnet durch** folgende Verfahrensschritte:
a) Die Verdeckungsflanken (101,102,201,202,301,302) der ggf. selektierten Maskierer (100,200,300) werden segmentiert und in den einzelnen Segmenten durch Polynome niedriger Ordnung angenähert, wobei die Koeffizienten der Polynome niedriger Ordnung ermittelt werden;
b) für die Ermittlung der Koeffizienten der Polynome niedriger Ordnung werden die in logarithmische Pegel umgerechneten Intensitäten der Maskierer (100,200,300) verwendet, und
c) aus den die Verdeckungsflanken (101,102,201,202,301,302) der ggf. selektierten Maskierer (100,200,300) beschreibenden Polynomen wird - schrittweise Maskierer für Maskierer - an einzelnen, ggf. selektierten Stützstellen die globale Mithörschwelle (6) ermittelt.

2. Verfahren nach Anspruch 1, **dadurch gekennzeichnet**, daß bei der schrittweisen Berechnung der globalen Mithörschwelle (6) mit dem frequenzmäßig höchsten Maskierer (300) begonnen wird.

3. Verfahren nach Anspruch 1 oder 2, **dadurch gekennzeichnet**, daß bei der schrittweisen Berechnung der Mithörschwelle (6), stets von dem jeweiligen Maskierer ausgehend, dessen spektrale Verdeckungsflanke frequenzmäßig nach oben und dann nach unten ermittelt wird.

4. Verfahren nach einem der Ansprüche 1 bis 3, **dadurch gekennzeichnet**, daß diejenigen Maskierer unberücksichtigt bleiben, deren Verdeckungsflanken im wesentlichen keine Auswirkungen auf die Ermittlung der globalen Mithörschwelle (6) anhand der Verdeckungsflanken benachbarter Maskierer haben.

5. Verfahren nach einem der Ansprüche 1 bis 4, **dadurch gekennzeichnet**, daß diejenigen Maskierer unberücksichtigt bleiben, deren Verdeckungsflanken hinsichtlich des Pegels oder der Intensität weit unterhalb der globalen Mithörschwelle (6) liegen.

6. Verfahren nach einem der Ansprüche 1 bis 5, **dadurch gekennzeichnet**, daß die Berücksichtigung eines Maskierers (100,200,300) bei der Ermittlung der globalen Mithörschwelle (6) abgebrochen wird, sobald die Auswirkung seiner Verdeckungsflanke auf die Ermittlung der globalen Mithörschwelle (6) ein bestimmtes Maß unterschreitet.

7. Verfahren nach einem der Ansprüche 1 bis 5, **dadurch gekennzeichnet**, daß die Berücksichtigung eines Maskierers (100,200,300) bei der Ermittlung der globalen Mithörschwelle (6) abgebrochen wird, sobald der Pegel oder die Intensität seiner Verdeckungsflanke an der momentan ermittelten Stützstelle der globalen Mithörschwelle (6) ein bestimmtes Maß unterschreitet, so daß der Pegel die Intensität der Verdeckungsflanke im wesentlichen keine Auswirkungen auf die Ermittlung der globalen Mithörschwelle (6) hat.

8. Verfahren nach einem der Ansprüche 1 bis 7, **dadurch gekennzeichnet**, daß die Berücksichtigung eines Maskierers (100,200,300) bei der Ermittlung der globalen Mithörschwelle (6) abgebrochen wird, sobald der Pegel oder die Intensität der Verdeckungsflanke des Maskierers an der momentan ermittelten Stützstelle der globalen Mithörschwelle (6) ein bestimmtes Maß unter die Intensität oder den Pegel der Ruhehörschwelle (400) absinkt.

9. Verfahren nach einem der Ansprüche 1 bis 8, **dadurch gekennzeichnet**, daß die Intensitäten der Verdeckungsflanke der einzelnen Maskierer (100,200,300) bei der schrittweisen Ermittlung der globalen Mithörschwelle (6) addiert werden.

10. Verfahren nach Anspruch 9, **dadurch gekennzeichnet**, daß die Intensitätsaddition mit Hilfe eines Nomogramms erfolgt.

11. Verfahren nach Anspruch 10, **dadurch gekennzeichnet**, daß als Eingangswert für das Nomogramm der Absolutwert der Pegeldifferenz zwischen der bis dahin ermittelten globalen Mithörschwelle (6) und der Verdeckungsflanke des momentan betrachteten Maskierers (100,200,300) verwendet wird.

12. Verfahren nach Anspruch 10 oder 11, **dadurch gekennzeichnet**, daß der Ausgangswert des Nomogramms zu dem maximalen Pegel oder Intensitätswert addiert wird, der aus der bis ermittelten globalen Mithörschwelle (6) und der Verdeckungsflanke des momentan betrachteten Maskierers (100,200,300) gebildet wird.

13. Verfahren nach einem der Ansprüche 9 bis 12, **dadurch gekennzeichnet**, daß die möglichen Intensitäten oder Pegeladditionswerte auf eine vorausberechnete, der gewünschten Genauigkeit entsprechende Anzahl beschränkt werden.

14. Verfahren nach einem der Ansprüche 1 bis 13, **dadurch gekennzeichnet**, daß die spektralen Stützstellen für die Berechnung der globalen Mithörschwelle (6) so festgelegt werden, daß sie nur an diskreten, spektralen Orten zu liegen kommen.

15. Verfahren nach einem der Ansprüche 1 bis 14, **dadurch gekennzeichnet**, daß der spektrale Abstand der Stützstellen zur Ermittlung der globalen Mithörschwelle (6) im unteren Frequenzbereich geringer ist als im mittleren Frequenzbereich und im oberen Frequenzbereich größer ist als im mittleren Frequenzbereich.

16. Verfahren nach einem der Ansprüche 1 bis 15, **dadurch gekennzeichnet**, daß das digitalisierte Tonsignal in den Frequenzbereich abgebildet wird und daß die spektralen Stützstellen für die Ermittlung der globalen Mithörschwelle (6) so festgelegt werden, daß sie auf den Stützstellen der Abbildung zu liegen kommen.

17. Verfahren nach einem der Ansprüche 1 bis 16, **dadurch gekennzeichnet**, daß die logarithmischen Pegel in Pegelstufen quantisiert werden.

18. Verfahren nach Anspruch 17, **dadurch gekennzeichnet**, daß zur Umrechnung der Intensitäten in logarithmische Pegel eine Tabelle verwendet wird.

19. Verfahren nach Anspruch 18, **dadurch gekennzeichnet**, daß die Anzahl der in der Tabelle enthaltenen Zuordnungen zwischen Intensitätswerten und logarithmischen Pegelstufen durch Aufteilung der Intensitätswerte in Mantissen und Exponenten und durch Ablage lediglich der Mantissen reduziert wird.

## Claims

1. Method for the ascertaining of the overall side-tone threshold (6) in a bitrated reducing source coding of digitalized audio signals (1) in which from the masking effect of all relevant tonal maskers and noise maskers (100, 200, 300) as well as from the quiescent audibility threshold (400) a requantizing and coding direction for the time or spectral scanning values (2) of the audio signal is ascertained, characterised by the following method steps:
a)The masking flanks (101, 102, 201, 202, 301, 302) of the as the case may be selected maskers (100, 200, 300) are segmented and approximated in the individual segments by polynomes of lower order whereby the coefficients of the polynomes of lower order are ascertained;
b) for the ascertaining of the coefficients of the polynomes of lower order, the intensities of the masks (100, 200, 300) recalculated into logarithmic levels are used and
c) from the polynomes describing the masking flanks (101, 102, 201, 301, 302) of the as the case may be, selected maskers (100, 200, 300) - stepwise masker by masker - is ascertained at individual, as the case may be, selected supporting places the overall side-tone threshold (6).

2. Method according to claim 1, characterised in that with the stepwise calculation of the overall side-tone threshold (6) start is made with the maskers (300) highest masker (300) so far as frequency is concerned.

3. Method according to claim 1 or 2, characterised in that with the stepwise calculation of the side-tone threshold (6), always proceeding from the respective masker, the spectral masking flank of which so far as frequency is concerned is ascertained upwards and then downwards.

4. Method according to one of the claims 1 to 3, characterised in that those maskers remain disregarded the masking flanks of which have substantially no effects on the ascertaining of the overall side-tone threshold (6) with reference to the masking flanks of adjacent maskers.

5. Method according to one of the claims 1 to 4, characterised in that those maskers remain disregarded the masking flanks of which as regards the level or the intensity are far below the overall side-tone threshold (6).

6. Method according to one of the claims 1 to 5, characterised in that the taking into consideration of a masker (100, 200, 300) in the ascertaining of the overall side-tone threshold (6) is broken off as soon as the effect of its masking flank on the ascertaining of the overall side-tone threshold (6) falls below a determined amount.

7. Method according to one of the claims 1 to 5, characterised in that the taking into consideration of a masker (100, 200, 300) in the ascertaining of the overall side-tone threshold (6) is broken off as soon as the level or the intensity of its masking flank at the instantaneously ascertained supporting place of the overall side-tone threshold (6) falls below a determined amount so that the level or the intensity of the masking flank has substantially no effects on the ascertaining of the overall side-tone threshold (6).

8. Method according to one of the claims 1 to 7, characterised in that the taking into consideration of a masker (100, 200, 300) in the ascertaining of the overall side-tone threshold (6) is broken off as soon as the level or the intensity of the masking flank of the masker at the instantaneously ascertained supporting place of the overall side-tone threshold (6) drops a determined amount below the intensity or the level of the quiescent audibility threshold (400).

9. Method according to one of the claims 1 to 8, characterised in that the intensities of the masking flank of the individual maskers (100, 200, 300) with the stepwise ascertaining of the overall side-tone threshold (6) are added.

10. Method according to claim 9, characterised in that the intensity addition is effected with the aid of a nomogram.

11. Method according to claim 10, characterised in that as input value for the nomogram the absolute value of the level difference between the overall side-tone threshold (6) ascertain up till then and the masking flank of the instantaneously considered masker (100, 200, 300) is used.

12. Method according to claim 10 or 11, characterised in that the output value of the nomogram is added to the maximum level or intensity value which is formed the overall side-tone threshold (6) and the masking flank of instantaneously considered masker (100, 200, 300).

13. Method according to one of the claims 9 to 12, characterised in that the possible intensities or level addition values are limited to a previously calculated number corresponding to the desired accuracy.

14. Method according to one of the claims 1 to 13, characterised in that the spectral supporting places for the calculation of the overall side-tone threshold (6) are so determined that they come to lie only on discrete, spectral places.

15. Method according to one of the claims 1 to 14, characterised in that the spectral distance of the supporting places for the ascertaining of the overall side-tone threshold (6) is less in the low frequency range than in the middle frequency range and in the upper frequency range is greater than the middle frequency range.

16. Method according to one of the claims 1 to 15, characterised in that the digitalized audio signal is formed in the frequency range and that the spectral supporting places for the ascertaining of the overall side-tone threshold (6) are so determined that they come to lie on the supporting places of the illustration.

17. Method according to one of the claims 1 to 16, characterised in that the logarithmic levels are quantized in the level stages.

18. Method according to claim 17, characterised in that for the re-calculation of the intensities in logarithmic levels a table is used.

19. Method according to claim 18, characterised in that the number of the correlations contained in the table between intensity values and logarithmic levels by distribution of the intensity values in mantissa and exponents and by deposit only of the mantissa is reduced.

## Revendications

1. Procédé pour déterminer le seuil global d'écoute (6) dans le cas d'un codage source, qui réduit la cadence binaire, de signaux acoustiques numérisés (1), selon lequel une prescription de quantification et de codage pour des valeurs d'échantillonnage temporelles ou spectrales (2) du signal acoustique est déterminée à partir de l'action de masquage de tous les masqueurs audio concernés et de tous les masqueurs de bruit vidéo concernés (100,200,300) ainsi qu'à partir du seuil d'écoute au repos (400), caractérisé par les étapes opératoires suivantes :
a) les flancs de masquage (101,102,201,202,301,302) des masqueurs éventuellement sélectionnés (100,200,300) sont segmentés et sont obtenus de façon approximative, dans les segments individuels, par des polynômes d'ordre faible, avec détermination des coefficients des polynômes d'ordre faible;
b) pour la détermination des coefficients des polynômes d'ordre faible, on utilise les intensités, converties en des niveaux logarithmiques, des masqueurs (100,200, 300), et
c) le seuil global d'écoute (6) est déterminé - pas-à-pas masqueur après masqueur - en des points individuels de base éventuellement sélectionnés, à partir des polynômes décrivant les flancs de masquage (101,102, 201,202,301,302) des masqueurs (100,200,300) éventuellement sélectionné.

2. Procédé suivant la revendication 1, caractérisé en ce que dans le cas du calcul pas-à-pas du seuil global d'écoute (6), on commence avec le masqueur (300) ayant la fréquence la plus élevée.

3. Procédé suivant la revendication 1 ou 2, caractérisé en ce que dans le cas du calcul pas-à-pas du seuil d'écoute (6), toujours à partir du masqueur respectif, la fréquence des flancs spectraux de masquage de ce masqueur est déterminée vers le haut, puis vers le bas.

4. Procédé selon l'une des revendications 1 à 3, caractérisé en ce qu'on ne prend pas en compte les masqueurs, dont les flancs de masquage ne possèdent pour l'essentiel aucun effet sur la détermination du seuil global d'écoute (6) sur la base des flancs de masquage de masqueurs voisins.

5. Procédé selon l'une des revendications 1 à 4, caractérisé en ce qu'on ne prend pas en compte les masqueurs, dont le niveau ou l'intensité des flancs de masquage est situé très au-dessous du seuil global d'écoute (6).

6. Procédé selon l'une des revendications 1 à 5, caractérisé en ce que la prise en compte d'un masqueur (100,200,300) lors de la détermination du seuil global d'écoute (6) est interrompue dès que l'effet de ses flancs de masquage sur la détermination du seuil global d'écoute (6) tombe au-dessous d'une valeur déterminée.

7. Procédé selon l'une des revendications 1 à 5, caractérisé en ce que la prise en compte d'un masqueur (100,200,300) lors de la détermination du seuil global d'écoute (6) est interrompue dès que le niveau ou l'intensité de ces flancs de masquage au niveau du point de base, déterminé à cet instant, du seuil global d'écoute (6), tombe au-dessous d'une valeur déterminée, de sorte que le niveau ou l'intensité du flanc de masquage n'a essentiellement aucun effet sur la détermination du seuil global d'écoute (6).

8. Procédé selon l'une des revendications 1 à 7, caractérisé en ce que la prise en compte d'un masqueur (100,200,300) lors de la détermination du seuil global d'écoute (6) est interrompue dès que le niveau ou l'intensité du flanc de masquage du masqueur au point de base, déterminé à cet instant, du seuil global d'écoute (6) tombe, d'une valeur déterminée, au-dessous de l'intensité ou du niveau du seuil d'écoute au repos (400).

9. Procédé selon l'une des revendications 1 à 8, caractérisé en ce que les intensités des flancs de masquage des différents masqueurs (100,200,300) sont additionnées lors de la détermination pas-à-pas du seuil global d'écoute (6).

10. Procédé selon la revendication 9, caractérisé en ce que l'addition des intensités s'effectue à l'aide d'un nomogramme.

11. Procédé selon la revendication 10, caractérisé en ce qu'on utilise comme valeur d'entrée pour le nomogramme la valeur absolue de la différence de niveau entre le seuil global acoustique (6) déterminé jusqu'alors et le flanc de masquage du masqueur (100,200,300) considéré à cet instant.

12. Procédé selon la revendication 10 ou 11, caractérisé en ce que la valeur axiale de sortie du nomogramme est ajoutée au niveau maximum ou à la valeur d'intensité maximale, qui est formée à partir du seuil global d'écoute (6), déterminé jusqu'alors, et du flanc de masquage du masqueur (20,200,300) considéré à cet instant.

13. Procédé selon l'une des revendications 9 à 12, caractérisé en ce que les intensités possibles ou les valeurs possibles d'addition de niveaux sont limitées à un nombre préalablement calculé, qui correspond à la précision désirée.

14. Procédé selon l'une des revendications 1 à 13, caractérisé en ce que les points de base spectraux pour le calcul du seuil global d'écoute (6) sont fixés de manière à venir se placer uniquement en des emplacements spectraux discrets.

15. Procédé selon l'une des revendications 1 à 14, caractérisé en ce que la distance spectrale des points de base pour la détermination du seuil global d'écoute (6) dans la gamme des fréquences inférieures est inférieure à ce qu'elle est dans la gamme des moyens de fréquence et est supérieure, dans la gamme des fréquences supérieures, à ce qu'elle est dans la gamme des fréquences moyennes.

16. Procédé selon l'une des revendications 1 à 15, caractérisé en ce que l'image du signal acoustique numérisé est formée dans la gamme des fréquences, et que les points de base spectraux pour la détermination du seuil global d'écoute (6) sont fixés de manière à venir se situer au niveau des points de base dans l'image.

17. Procédé selon l'une des revendications 1 à 16, caractérisé en ce que les niveaux logarithmiques sont quantifiés selon des échelons.

18. Procédé selon l'une des revendications 17, caractérisé en ce que pour la conversion des intensités en niveaux logarithmiques, on utilise un tableau.

19. Procédé selon la revendication 18, caractérisé en ce qu'on réduit le nombre des associations, contenues dans le tableau, entre des valeurs d'intensité et des échelons logarithmiques de niveau par subdivision des valeurs d'intensité en des mantisses et des exposants et conservation des mantisses seules.
